# FASCICULE DE BREVET EUROPEEN

(11) **EP 1 081 376 B1**
(45) Date de publication et mention de la délivrance du brevet: **27.07.2005**
(21) Numéro de dépôt: 00402252.1
(22) Date de dépôt: 09.08.2000
(51) Int. Cl.: F03D 9/00, F03D 11/00, F03D 1/00, H02K 7/18, H02K 9/14

(54) **Nacelle d'éolienne constituée par la carcasse d'un générateur électrique, et éolienne correspondante**
Maschinengondel einer Windturbine, bestehend aus dem Gehäuse eines elektrischen Generators, und entsprechende Windturbine
Wind turbine nacelle consisting of the housing of an electric generator, and corresponding wind turbine

(30) Priorité: 01.09.1999 FR 9910974
(43) Date de publication de la demande: 07.03.2001
(73) Titulaire: ALSTOM, 92300 Levallois-Perret (FR)
(72) Inventeur: Mercier, Jean-Charles, 54710 Ludres (FR); Feron, Stéphane, 75013 Paris (FR)
(74) Mandataire: de Lambilly Delorme, Marie Pierre

(56) Documents cités:
- DE-A- 19 636 591
- US-A- 4 370 095

## Description

L'invention porte sur une nacelle d'éolienne constituée d'une enveloppe rigide dans laquelle est disposé au moins un générateur électrique destiné à être couplé à au moins une hélice d'éolienne. US-A-3470095 décrit une telle éolienne.

L'enveloppe de ce type de nacelle est habituellement réalisée en matériaux composites ou en métal et réclame des adaptations particulières pour refroidir ses éléments internes comme le générateur électrique. En particulier, il est habituel de prévoir des systèmes de ventilation à l'intérieur de la nacelle ce qui complique sa structure et augmente son poids.

Le but de l'invention est de remedier à cet inconvénient.

Selon l'invention, l'enveloppe rigide de la nacelle est formée par la carcasse du générateur dans laquelle est monté un stator et un rotor. Cette carcasse de générateur peut avantageusement contenir les pignons d'engrenage du multiplicateur et le mécanisme d'orientation de la nacelle ce qui fait que la nacelle d'éolienne devient compacte. Il en résulte une simplification du montage de l'éolienne. En outre, cet agencement permet d'utiliser l'enveloppe de la nacelle comme surface d'échange thermique pour le refroidissement du générateur et du multiplicateur. L'hélice étant montée à l'arrière de la nacelle, le vent qui entraîne l'hélice de l'éolienne vient s'écouler le long de la carcasse du générateur ce qui contribue à renforcer l'échange thermique quand l'éolienne est en fonctionnement.

Pour maintenir un écoulement laminaire du vent qui entraîne l'hélice, sur toute la longueur de la nacelle, on peut prévoir avantageusement que l'enveloppe rigide de la nacelle soit entourée par un manchon tubulaire formant un passage d'air sensiblement annulaire le long de la nacelle.

Pour renforcer encore plus l'échange thermique stator-enveloppe de la nacelle, on peut prévoir de fretter l'enveloppe de la nacelle sur le stator du générateur. Cet agencement renforce en outre la cohérence mécanique des éléments montés à l'intérieur de la nacelle et diminue les phénomènes de vibration.

Le flux d'air chaud créé par la rotation du rotor est avantageusement dirigé vers la surface intérieur de l'enveloppe de la nacelle à travers des ouvertures latérales s'étendant complétement à travers le stator.

Selon un mode de réalisation particulier de la nacelle selon l'invention, le générateur est couplé à l'hélice d'éolienne par l'intermédiaire d'un multiplicateur épicycloïdal à arbre d'entrée et de sortie coaxiaux, ce qui fait que l'hélice peut directement être couplée sur la sortie d'arbre du générateur. Cet agencement contribue en outre à réduire le nombre de pignons d'engrenages du multiplicateur.

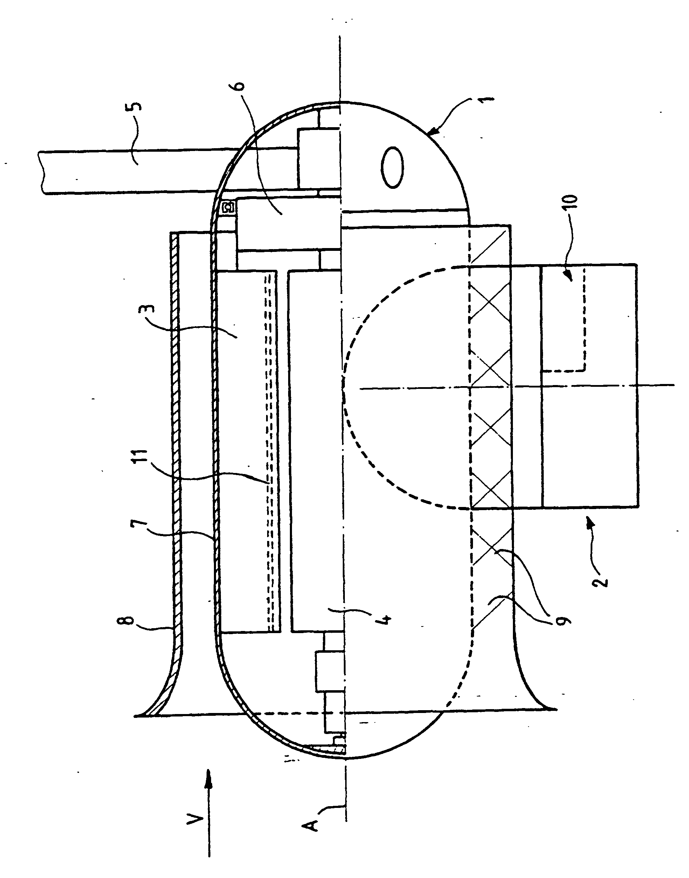

La nacelle d'éolienne selon l'invention est décrit ci-après plus en détail en relation avec la figure unique qui la montre très schématiquement montée à l'extrémité d'un mat.

La figure montre en partie et de façon très schématique une éolienne comprenant une nacelle 1 montée rotative à l'extrémité d'un mat vertical 2.

Comme visible sur la figure, la nacelle 1 a une forme sensiblement cylindrique et s'étend suivant un axe de révolution A perpendiculairement au mat 2.

Un générateur électrique constitué d'un stator 3 et d'un rotor 4 (montrés en partie sur la figure au dessus de l'axe A) est monté dans la nacelle et est couplé à au moins une hélice telle que 5 par l'intermédiaire d'un multiplicateur (réducteur) épicycloïdal 6.

L'enveloppe extérieure rigide 7 de la nacelle est formée par la carcasse métallique du générateur. Elle est entourée coaxialement par un manchon tubulaire 8 qui forme un passage annulaire pour le vent V entraînant l'hélice 5. L'extrémité du manchon 8 face au vent V est ici en forme de tulipe et l'hélice 5 est montée à l'arrière de la nacelle par rapport à la direction du vent V pour maintenir une certaine stabilité de l'écoulement d'air dans le passage formé par le manchon 8. Le multiplicateur 6 est monté dans l'enveloppe 7 et l'hélice 5 est fixée directement en sortie d'arbre ce qui simplifie le montage mécanique et notamment l'accouplement entre le générateur et le multiplicateur.

Le manchon 8 peut être fixé à distance de l'enveloppe 7 par l'intermédiaire de croisillons support tels que 9.

Le système d'orientation 10 de la nacelle est ici montré intégré à l'extrémité du mat 2 mais pourrait parfaitement être disposé à l'intérieur de la nacelle 1 ce qui contriburait à simplifier le montage de l'éolienne.

L'enveloppe 7 est avantageusement frettée sur le stator 3 et des ouvertures latérales 11 s'étendent complètement à travers le stator pour diriger l'air chaud créé par la rotation du rotor vers l'enveloppe 7 de telle façon que cet air chaud est refroidit par écoulement le long de l'enveloppe 7 jouant le rôle d'un échangeur thermique avec l'air extérieur à la nacelle.

## Revendications

1. Une nacelle d'éolienne constituée d'une enveloppe rigide (7) dans laquelle est disposé au moins un générateur électrique destiné à être couplé à au moins une hélice (5) d'éolienne, **caractérisée en ce que** l'enveloppe rigide de la nacelle est formée par la carcasse du générateur dans laquelle est monté un stator (3) et un rotor (4).

2. La nacelle selon la revendication 1 dans laquelle l'enveloppe rigide de la nacelle est entourée par un manchon tubulaire (8) formant un passage d'air sensiblement annulaire le long de la nacelle.

3. La nacelle selon l'une des revendications 1 ou 2, dans laquelle l'enveloppe de la nacelle est frettée sur le stator du générateur.

4. La nacelle selon l'une des revendications 1 à 3, dans laquelle des ouvertures latérales (11) s'étendent complétement à travers le stator.

5. La nacelle selon l'une des revendications 1 à 4, dans laquelle le générateur est couplé à l'hélice d'éolienne par l'intermédiaire d'un multiplicateur épicycloïdal (6).

6. La nacelle selon la revendication 5, dans laquelle ledit multiplicateur (6) est monté dans ladite enveloppe rigide (7).

7. Une éolienne comprenant une nacelle (1) selon l'une des revendications 1 à 6 qui est montée rotative à l'extrémité d'un mat (2).

## Patentansprüche

1. Gondel für eine Windturbine, welche aus einer starren Hülle (7) gebildet ist, in der wenigstens ein elektrischer Generator angeordnet ist, der dazu bestimmt ist, mit wenigstens einem Flügelrad (5) der Windturbine verbunden zu werden, **dadurch gekennzeichnet, dass** die starre Hülle der Gondel durch das Gehäuse des Generators, in dem ein Ständer (3) und ein Rotor (4) angebracht ist, gebildet wird.

2. Gondel gemäss Anspruch 1, in welcher die starre Hülle der Gondel von einem röhrenförmigen Stutzen (8) umgeben ist, der einen im wesentlichen ringförmigen Luftdurchlass entlang der Gondel bildet.

3. Gondel gemäss Anspruch 1 oder 2, in welcher die Hülle der Gondel auf dem Ständer des Generators aufgeschrumpft ist.

4. Gondel gemäss einem der Ansprüche 1 bis 3, in welcher sich seitliche Öffnungen (11) vollständig entlang dem Ständer erstrecken.

5. Gondel gemäss einem der Ansprüche 1 bis 4, in welcher der Generator mit dem Flügelrad der Windturbine mittels einem epizykloidischen Multiplikator (6) verbunden ist.

6. Gondel gemäss Anspruch 5, in welcher der Multiplikator (6) in der starren Hülle (7) angebracht ist.

7. Windturbine, welche eine Gondel (1) gemäss einem der Ansprüche 1 bis 6 aufweist, die drehbar an dem Ende eines Mastes (2) angebracht ist.

## Claims

1. A wind-power generator pod constituted by a rigid fairing (7) in which at least one electricity generator is disposed for coupling to at least one wind-driven propeller (5), the pod being **characterized in that** its rigid fairing is formed by the body of the generator in which a stator (3) and a rotor (4) are mounted.

2. The pod according to claim 1, in which the rigid fairing of the pod is surrounded by a tubular sleeve (8) forming a substantially annular air passage along the pod.

3. The pod according to claim 1 or 2, in which the fairing of the pod is an interference fit on the stator of the generator.

4. The pod according to any one of claims 1 to 3, in which lateral openings (11) extend right through the stator.

5. The pod according to any one of claims 1 to 4, in which the generator is coupled to the wind-driven propeller via an epicyclic gearbox (6).

6. The pod according to claim 5, in which said gearbox (6) is mounted inside said rigid fairing (7).

7. A wind-power generator comprising a pod (1) according to any one of claims 1 to 6 and mounted to swivel at the end of a mast (2).
